# EUROPEAN PATENT APPLICATION

(11) **EP 4 693 712 A1**
(43) Date of publication of application: **11.02.2026**
(21) Application number: 24901012.5
(22) Date of filing: 03.12.2024
(51) Int. Cl.: H01M 50/583, H01M 50/503, H01M 50/507, H01M 50/543

(54) **BATTERY PACK**

(30) Priority: 07.12.2023 KR 20230176186
(71) Applicant: LG Energy Solution, Ltd., Seoul 07335 (KR)
(72) Inventor: SON, Hong Se, Daejeon 34122 (KR)
(74) Representative: Plasseraud IP
(86) International application number: PCT/KR2024/019532
(87) International publication number: WO 2025/121826

(57) **Abstract**

According to exemplary embodiments of the present invention, a battery pack is provided. The battery pack includes: a first battery cell assembly including a first positive electrode terminal and a first negative electrode terminal; a second battery cell assembly spaced apart from the first battery cell assembly in a first direction, and including a second positive electrode terminal and a second negative electrode terminal; and a first inter-bus bar connecting the first negative electrode terminal with the second positive electrode terminal, wherein the first inter-bus bar has a Z-shape.

## Description

### Technical Field

The present invention relates to a battery pack. The present application claims the benefit of priority based on Korean Patent Application No. 10-2023-0176186, filed on December 7, 2023, and the entire contents of the Korean patent application is incorporated herein by reference.

### Background Art

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### Disclosure

### Technical Problem

The present invention is directed to providing a battery pack in which an internal short circuit is prevented to improve safety when a thermal runaway event occurs.

### Technical Solution

Example embodiments provide a battery pack. The battery pack includes a first battery cell assembly including a first positive terminal and a first negative terminal, a second battery cell assembly including a second positive terminal and a second negative terminal and spaced apart from the first battery cell assembly in a first direction, and a first inter-bus bar connecting the first negative terminal and the second positive terminal, in which the first inter-bus bar has a Z-shape.

The first inter-bus bar may include a first negative electrode contact connected to the first negative terminal, a first positive electrode contact connected to the second positive terminal, and a first connection part connecting the first positive electrode contact and the first negative electrode contact.

The first connection part may extend in a second direction perpendicular to the first direction.

The battery pack may further include a third battery cell assembly including a third positive terminal and a third negative terminal and spaced apart from the second battery cell assembly in the first direction, and a second inter-bus bar connecting the second negative terminal and the third positive terminal, and the second inter-bus bar may have a Z-shape.

An arrangement of the second inter-bus bar may be an inversion of an arrangement of the first inter-bus bar.

The second inter-bus bar may include a second negative electrode contact connected to the second negative terminal, a second positive electrode contact connected to the third positive terminal, and a second connection part connecting the second positive electrode contact and the second negative electrode contact.

The first positive electrode contact may overlap the second negative electrode contact in the first direction, and the first negative electrode contact may overlap the second positive electrode contact in the first direction.

Example embodiments provide a battery pack. The battery pack includes a first battery cell assembly including a first positive terminal and a first negative terminal, a second battery cell assembly including a second positive terminal and a second negative terminal and spaced apart from the first battery cell assembly in a first direction, and a first inter-bus bar connecting the first negative terminal and the second positive terminal, in which the first inter-bus bar includes a first negative electrode contact connected to the first negative terminal, a first positive electrode contact extending in the first direction, and a first connection part connecting the first positive electrode contact and the first negative electrode contact and extending in a second direction perpendicular to the first direction.

The first negative terminal and the second positive terminal may be arranged in the first direction.

Each of the first positive electrode contact and the first negative electrode contact may extend in the first direction.

The first positive terminal and the first negative terminal may be spaced apart from each other in the second direction.

The second positive terminal and the second negative terminal may be spaced apart from each other in the second direction.

The first negative terminal may be adjacent to a central area in the second direction, and the second positive terminal may be adjacent to an edge in the second direction.

### Advantageous Effects

Positive terminals and negative terminals of a plurality of battery cell assemblies of a battery pack according to example embodiments of the present invention can be arranged in a distributed manner. Therefore, when a thermal runaway event occurs in the battery pack, it is possible to prevent an internal short circuit of the plurality of battery cell assemblies and improve the safety of the battery pack.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### Brief Description of the Drawings

FIG. 1 is a plan view of a battery pack according to example embodiments.
FIG. 2 is an enlarged partial plan view of a part of FIG. 1.
FIG. 3 is a plan view of a battery pack according to other example embodiments.

### Best Mode

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

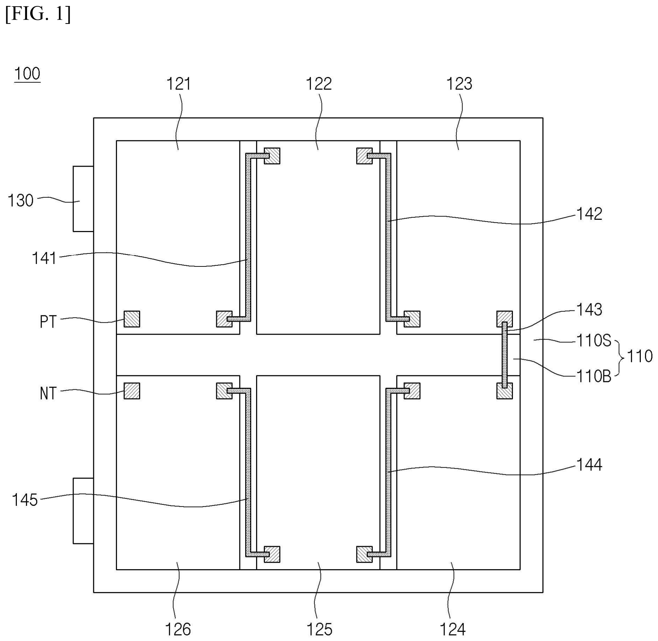

FIG. 1 is a plan view of a battery pack 100 according to example embodiments.

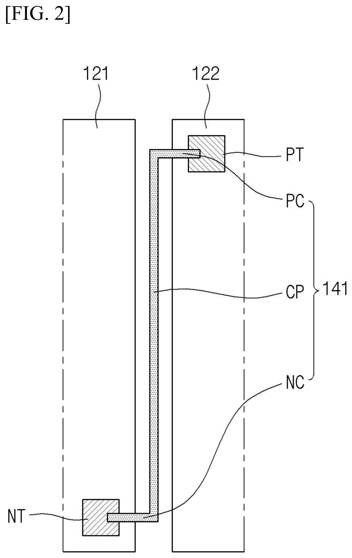

FIG. 2 is a partial plan view of a part of FIG. 1.

Referring to FIGS. 1 and 2, the battery pack 100 may include a pack housing 110, a plurality of battery cell assemblies 121, 122, 123, 124, 125 and 126, exhaust devices 130, and inter-busbars 141, 142, 143, 144 and 145. The battery pack 100 is a final form of a battery system to be mounted in a mobility or the like.

The pack housing 110 may include a base plate 110B and side walls 110S. Here, two directions substantially parallel to a mounting surface of the base plate 110B are defined as an X-axis direction and a Y-axis direction, and a direction substantially perpendicular to the mounting surface of the base plate 110B is defined as a Z-axis direction. The X-axis direction, the Y-axis direction, and the Z-axis direction may be substantially perpendicular to one another.

The base plate 110B may have a flat plate shape. The side walls 110S may be substantially perpendicular to the base plate 110B. The side walls 110S may be adjacent to edges of the base plate 110B. The side walls 110S may be coupled to the edges of the base plate 110B.

The base plate 110B may include a center beam. The center beam may be surrounded by the side walls 110S. Accordingly, the center beam may partition a space defined by the pack housing 110.

Each of the base plate 110B and the side walls 110S may be provided by an extrusion process. The base plate 110B may include a plurality of plates coupled to each other by friction stir welding. The center beam may be included in one of the plurality of plates of the base plate 110B, formed by the extrusion process, together with one of the plurality of plates of the base plate 110B, or welded to one of the plurality of plates of the base plate 110B.

The plurality of battery cell assemblies 121, 122, 123, 124, 125 and 126 may be on the mounting surface of the base plate 110B of the pack housing 110. The battery cell assemblies 121, 122, and 123 may be arranged in the X-axis direction. The battery cell assemblies 124, 125, and 126 may be arranged in the X-axis direction. The battery cell assemblies 121, 122, and 123 may be spaced apart from the battery cell assemblies 124, 125, and 126 in the Y-axis direction.

The base plate 110B may support the plurality of battery cell assemblies 121, 122, 123, 124, 125, and 126. The side walls 110S may horizontally surround the plurality of battery cell assemblies 121, 122, 123, 124, 125, and 126.

In example embodiments, the battery pack 100 may be of a moduleless type, and each of the plurality of battery cell assemblies 121, 122, 123, 124, 125 and 126 may not include a module frame. In example embodiments, the battery pack 100 may be of a module type, and each of the plurality of battery cell assemblies 121, 122, 123, 124, 125 and 126 may include a module frame.

Each of the plurality of battery cell assemblies 121, 122, 123, 124, 125, and 126 may include a cell stack including a plurality of battery cells, a positive terminal PT, and a negative terminal NT.

The cell stack may include a plurality of battery cells. The battery cells are basic units of a lithium ion battery, i.e., a secondary battery. The battery cells may each include an electrode assembly, an electrolyte, and a case.

Each of the battery cells may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. A jelly roll type electrode assembly is manufactured by winding a positive electrode, a negative electrode, and a separator interposed therebetween. A stack type electrode assembly may include a plurality of positive electrodes and a plurality of negative electrodes that are stacked sequentially, and a plurality of separators interposed therebetween.

According to example embodiments, the battery cells of the cell stack may form a plurality of banks. The plurality of banks may include one or more battery cells connected in parallel. The plurality of banks may be connected in series to each other. The number of battery cells included in each of the plurality of banks and the number of banks of the cell stack may be determined according to a voltage and a current to be output through the battery cell assembly 120.

According to example embodiments, the cell stack may further include a plurality of separators. The plurality of separators may horizontally support the plurality of battery cells to prevent swelling of the plurality of battery cells. According to example embodiments, the plurality of separators may be thermal barriers. According to example embodiments, each of the plurality of separators may have high melting temperature and low thermal conductivity. According to example embodiments, each of the plurality of separators may include a flame retardant material such as a ceramic and a coated glass material. According to example embodiments, the plurality of separators may be configured to discharge a fire retarding material and a fire extinguishing agent when a thermal runaway event occurs.

According to example embodiments, the positive terminal PT and the negative terminal NT may be configured to be electrically connected to the cell stack. According to example embodiments, the positive terminal PT and the negative terminal NT may be configured to output a voltage of the cell stack. Resulting power (i.e., a voltage and/or current) according to an electrical configuration of the cell stack may be output through the positive terminal PT and the negative terminal NT.

In the present example, the positive terminal PT and the negative terminal NT of each of the plurality of battery cell assemblies 121, 122, 123, 124, 125 and 126 may be arranged in the X-axis direction. The positive terminal PT and the negative terminal NT of the battery cell assembly 121 may be spaced apart from each other and overlap each other in the X-axis direction. The positive terminal PT and the negative terminal NT of the battery cell assembly 122 may be spaced apart from each other and overlap each other in the X-axis direction. The positive terminal PT and the negative terminal NT of the battery cell assembly 123 may be spaced apart from each other and overlap each other in the X-axis direction. The positive terminal PT and the negative terminal NT of the battery cell assembly 124 may be spaced apart from each other and overlap each other in the X-axis direction. The positive terminal PT and the negative terminal NT of the battery cell assembly 125 may be spaced apart from each other and overlap each other in the X-axis direction. The positive terminal PT and the negative terminal NT of the battery cell assembly 126 may be spaced apart from each other and overlap each other in the X-axis direction.

The positive terminal PT and the negative terminal NT of the battery cell assembly 121 may be respectively spaced apart from the positive terminal PT and the negative terminal NT of the battery cell assembly 122 in the Y-axis direction. The positive terminal PT and the negative terminal NT of the battery cell assembly 122 may be respectively spaced apart from the positive terminal PT and the negative terminal NT of the battery cell assembly 123 in the Y-axis direction. The positive terminal PT and the negative terminal NT of the battery cell assembly 124 may be respectively spaced apart from the positive terminal PT and the negative terminal NT of the battery cell assembly 125 in the Y-axis direction. The positive terminal PT and the negative terminal NT of the battery cell assembly 125 may be respectively spaced apart from the positive terminal PT and the negative terminal NT of the battery cell assembly 126 in the Y-axis direction.

The positive terminal PT and the negative terminal NT of the battery cell assembly 121 may be closer to a central area of the pack housing 110 in the Y-axis direction than to an edge of the pack housing 110 in the Y-axis direction (i.e., an edge of the pack housing 110 parallel to the X-axis direction). The positive terminal PT and the negative terminal NT of the battery cell assembly 122 may be closer to the edge of the pack housing 110 in the Y-axis direction (i.e., the edge of the pack housing 110 parallel to the X-axis direction) than to the central area of the pack housing 110 in the Y-axis direction. The positive terminal PT and the negative terminal NT of the battery cell assembly 123 may be closer to the central area of the pack housing 110 in the Y-axis direction than to the edge of the pack housing 110 in the Y-axis direction (i.e., the edge of the pack housing 110 parallel to the X-axis direction). The positive terminal PT and the negative terminal NT of the battery cell assembly 124 may be closer to the central area of the pack housing 110 in the Y-axis direction than to the edge of the pack housing 110 in the Y-axis direction (i.e., the edge of the pack housing 110 parallel to the X-axis direction). The positive terminal PT and the negative terminal NT of the battery cell assembly 125 may be closer to the edge of the pack housing 110 in the Y-axis direction (i.e., the edge of the pack housing 110 parallel to the X-axis direction) than to the central area of the pack housing 110 in the Y-axis direction. The positive terminal PT and the negative terminal NT of the battery cell assembly 126 may be closer to the central area of the pack housing 110 in the Y-axis direction than to the edge of the pack housing 110 in the Y-axis direction (i.e., the edge of the pack housing 110 parallel to the X-axis direction).

The exhaust devices 130 may be coupled to one of the side walls 110S. The side wall 110S coupled to the exhaust devices 130 may include an exhaust path connected to the exhaust devices 130. The exhaust devices 130 may be configured to delay thermal propagation by discharging a high-temperature gas from the inside of the battery pack 100 to the outside when at least one of the plurality of battery cell assemblies 121, 122, 123, 124, 125, and 126 is in a thermal runaway state.

Here, the thermal runaway state of each of the plurality of battery cell assemblies 121, 122, 123, 124, 125 and 126 is a state in which a temperature change of each of the plurality of battery cell assemblies 121, 122, 123, 124, 125 and 126 accelerates the temperature change, and is an uncontrollable positive feedback. The temperature of the plurality of battery cell assemblies 121, 122, 123, 124, 125 and 126 that are in the thermal runaway state sharply increases, and a large amount of a high-pressure gas and combustion debris are discharged.

The inter-busbars 141, 142, 143, 144 and 145 may connect the plurality of battery cell assemblies 121, 122, 123, 124, 125, and 126 to one another. The plurality of battery cell assemblies 121, 122, 123, 124, 125, and 126 may be electrically connected in series via the inter-busbars 141, 142, 143, 144 and 145.

The inter-bus bar 141 may be interposed between the battery cell assemblies 121 and 122. The inter-bus bar 141 may be configured to be electrically connected to the battery cell assemblies 121 and 122. The inter-bus bar 141 may be connected to the negative terminal NT of the battery cell assembly 121 and the positive terminal PT of the battery cell assembly 122.

The inter-bus bar 142 may be interposed between the battery cell assemblies 122 and 123. The inter-bus bar 142 may be configured to be electrically connected to the battery cell assemblies 122 and 123. The inter-bus bar 142 may be connected to the negative terminal NT of the battery cell assembly 122 and the positive terminal PT of the battery cell assembly 123.

The inter-bus bar 143 may be interposed between the battery cell assemblies 123 and 124. The inter-bus bar 143 may be configured to be electrically connected to the battery cell assemblies 123 and 124. The inter-bus bar 143 may be connected to the negative terminal NT of the battery cell assembly 123 and the positive terminal PT of the battery cell assembly 124.

The inter-bus bar 144 may be interposed between the battery cell assemblies 124 and 125. The inter-bus bar 144 may be configured to be electrically connected to the battery cell assemblies 124 and 125. The inter-bus bar 144 may be connected to the negative terminal NT of the battery cell assembly 124 and the positive terminal PT of the battery cell assembly 125.

The inter-bus bar 145 may be interposed between the battery cell assemblies 125 and 126. The inter-bus bar 145 may be configured to be electrically connected to the battery cell assemblies 125 and 126. The inter-bus bar 145 may be connected to the negative terminal NT of the battery cell assembly 125 and the positive terminal PT of the battery cell assembly 126.

Each of the inter-bus bars 141, 142, 144, and 145 may have a Z-shape. The inter-bus bar 143 may have a straight bar shape. An arrangement of the inter-bus bar 141 may be an inversion of that of the inter-bus bar 142. A planar shape of the inter-bus bar 141 may be substantially the same as the inversion of a planar shape of the inter-bus bar 142. An arrangement of the inter-bus bar 144 may be an inversion of that of the inter-bus bar 145. A planar shape of the inter-bus bar 144 may be substantially the same as the inversion of a planar shape of the inter-bus bar 145. The arrangement of the inter-bus bar 141 may be an inversion of that of the inter-bus bar 145. The planar shape of the inter-bus bar 141 may be substantially the same as the inversion of the planar shape of the inter-bus bar 145. The arrangement of the inter-bus bar 142 may be an inversion of that of the inter-bus bar 144. The planar shape of the inter-bus bar 142 may be substantially the same as the inversion of the planar shape of the inter-bus bar 144.

The planar shape of the inter-bus bar 141 may be substantially the same as the planar shape of the inter-bus bar 145. The planar shape of the inter-bus bar 142 may be substantially the same as the planar shape of the inter-bus bar 145.

Each of the inter-bus bars 141, 142, 144, and 145 may include a negative electrode contact NC extending in the X-axis direction, a positive electrode contact PC extending in the X-axis direction, and a connection part CP connecting the negative electrode contact NC to the positive electrode contact PC. The connection part CP may extend in the Y-axis direction. The connection part CP may be substantially perpendicular to each of the negative electrode contact NC and the positive electrode contact PC.

Shapes of the negative electrode contact NC and the positive electrode contact PC be substantially the same. The shapes of the inter-bus bars 141, 142, 144, and 145 may be symmetric with respect to the connection part CP. A change of a connection method of the inter-bus bars 141, 142, 144, and 145 may result in a change of an orientation of the inter-bus bars 141, 142, 144, and 145, and thus, the negative electrode contact NC may be switched to a positive electrode contact and the positive electrode contact PC may be switched to a negative electrode contact.

The negative electrode contact NC may be connected to the negative terminal NT of one of the plurality of battery cells 121, 122, 124, and 125. The negative electrode contact NC may be coupled to the negative terminal NT of one of the plurality of battery cell assemblies 121, 122, 124, and 125. The negative electrode contact NC may be fixed with the negative terminal NT of one of the plurality of battery cell assemblies 121, 122, 124, and 125 by welding or the like.

The positive electrode contact PC may be connected to the positive terminal PT of one of the plurality of battery cell assemblies 122, 123, 125, and 126. The positive electrode contact PC may be coupled to the positive terminal PT of one of the plurality of battery cell assemblies 122, 123, 125, and 126. The positive electrode contact PC may be fixed with the positive terminal PT of one of the plurality of battery cell assemblies 122, 123, 125 and 126 by welding or the like.

According to example embodiments, the positive terminals PT and the negative terminals NT of the plurality of battery cell assemblies 121, 122, 123, 124, 125 and 126 may be dispersed via the Z-shaped inter-bus bars 141, 142, 144 and 145. Accordingly, when a thermal runaway event occurs in the battery pack 100, an internal short circuit of the plurality of battery cell assemblies 121, 122, 123, 124, 125, and 126 due to the thermal runaway event may be mitigated or prevented, and the safety of the battery pack 100 may be improved.

The battery pack 100 may further include electronic components. The electronic components may be in the pack housing 110. The electronic components may be provided between one of the side walls 110S on which the exhaust devices are installed and the battery cell assemblies 121, 122, 123, 124, 125, and 126.

The electrical components may include, for example, a BMS. The BMS may be configured to monitor, balance, and control the battery pack 100. The monitoring of the battery pack 100 may include measuring voltages and currents of certain nodes inside the plurality of battery cell assemblies 121, 122, 123, 124, 125 and 126 and measuring temperatures at set positions inside the battery pack 100. The battery pack 100 may include measuring devices for measuring a voltage, a current, and temperature as described above.

The balancing of the battery pack 100 is an operation of reducing a deviation between the plurality of battery cell assemblies 121, 122, 123, 124, 125 and 126. The controlling of the battery pack 100 includes preventing overcharging, over-discharging, and overcurrent. Through monitoring, balancing, and controlling, the battery pack 100 may be operated under optimal conditions to prevent a decrease in the lifespan of each of the plurality of battery cell assemblies 121, 122, 123, 124, 125 and 126.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 121, 122, 123, 124, 125 and 126. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 121, 122, 123, 124, 125 and 126 and the external load, when an abnormal voltage such as a voltage surge occurs.

The battery pack 100 may further include a lead plate coupled to the side walls 110S. The lead plate may cover components, e.g., the battery cell assemblies 121, 122, 123, 124, 125 and 126 and the electronic components, inside the battery pack 100. The lead plate may be fixed to the battery pack 100 by a mechanical coupling means, e.g., a bolt.

### (Second Embodiment)

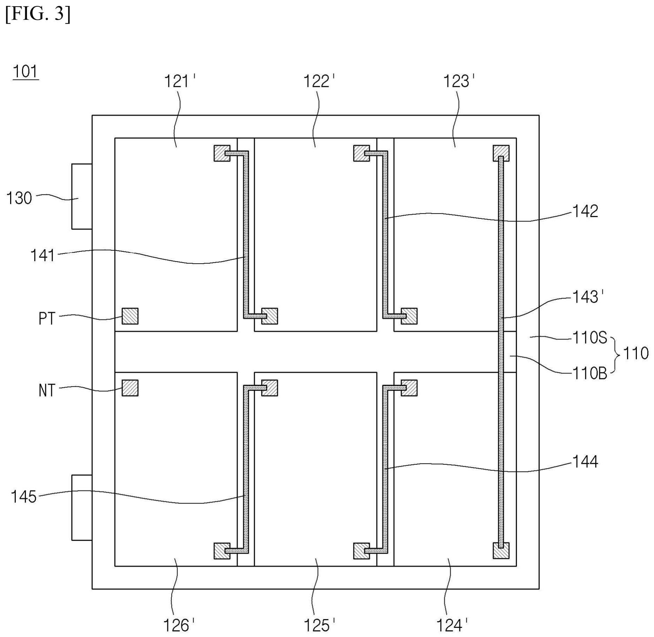

FIG. 3 illustrates a battery pack 101 according to other example embodiments.

Referring to FIG. 3, the battery pack 101 may include a pack housing 110, a plurality of battery cell assemblies 121, 122, 123, 124, 125, and 126, exhaust devices 130, and inter-busbars 141, 142, 143', 144 and 145.

In the present example, the positive terminal PT and the negative terminal NT of each of the plurality of battery cell assemblies 121', 122', 123', 124', 125' and 126' may not be arranged in the X-axis direction. The positive terminal PT and the negative terminal NT of the battery cell assembly 121' may be spaced apart from each other in the X-axis direction and the Y-axis direction. The positive terminal PT and the negative terminal NT of the battery cell assembly 121' may be arranged diagonally (i.e., obliquely to each of the X-axis direction and the Y-axis direction). The positive terminal PT and the negative terminal NT of the battery cell assembly 122' may be spaced apart from each other in the X-axis direction and the Y-axis direction. The positive terminal PT and the negative terminal NT of the battery cell assembly 122' may be arranged diagonally. The positive terminal PT and the negative terminal NT of the battery cell assembly 123' may be spaced apart from each other in the X-axis direction and the Y-axis direction. The positive terminal PT and the negative terminal NT of the battery cell assembly 123' may be arranged diagonally. The positive terminal PT and the negative terminal NT of the battery cell assembly 124' may be spaced apart from each other in the X-axis direction and the Y-axis direction. The positive terminal PT and the negative terminal NT of the battery cell assembly 124' may be arranged diagonally. The positive terminal PT and the negative terminal NT of the battery cell assembly 125' may be spaced apart from each other in the X-axis direction and the Y-axis direction. The positive terminal PT and the negative terminal NT of the battery cell assembly 125' may be arranged diagonally. The positive terminal PT and the negative terminal NT of the battery cell assembly 126' may be spaced apart from each other in the X-axis direction and the Y-axis direction. The positive terminal PT and the negative terminal NT of the battery cell assembly 126' may be arranged diagonally.

The positive terminals PT of the battery cell assemblies 121', 122' and 123' may overlap one another in the X-axis direction. The positive terminals PT of the battery cell assemblies 121', 122' and 123' may be arranged in the X-axis direction. The positive terminals PT of the battery cell assemblies 124', 125' and 126' may overlap one another in the X-axis direction. The positive terminals PT of the battery cell assemblies 124', 125' and 126' may be arranged in the X-axis direction.

The negative terminals NT of the battery cell assemblies 121', 122' and 123' may overlap one another in the X-axis direction. The negative terminals NT of the battery cell assemblies 121', 122' and 123' may be arranged in the X-axis direction. The negative terminals NT of the battery cell assemblies 124', 125' and 126' may overlap one another in the X-axis direction. The negative terminals NT of the battery cell assemblies 124', 125' and 126' may be arranged in the X-axis direction. The positive terminal PT of each of the battery cell assemblies 121', 122' and 123' may be closer to a central area of the pack housing 110 in the Y-axis direction than to an edge of the pack housing 110 in the Y-axis direction (i.e., an edge of the pack housing 110 parallel to the X-axis direction). The negative terminal NT of each of the battery cell assemblies 124', 125' and 126' may be closer to the central area of the pack housing 110 in the Y-axis direction than to the edge of the pack housing 110 in the Y-axis direction (i.e., the edge of the pack housing 110 parallel to the X-axis direction). The negative terminal NT of each of the battery cell assemblies 121', 122' and 123' may be closer to the edge of the pack housing 110 in the Y-axis direction (i.e., the edge of the pack housing 110 parallel to the X-axis direction) than to the central area of the pack housing 110 in the Y-axis direction. The positive terminal PT of each of the battery cell assemblies 124', 125' and 126' may be closer to the edge of the pack housing 110 in the Y-axis direction (i.e., the edge of the pack housing 110 parallel to the X-axis direction) than to the central area of the pack housing 110 in the Y-axis direction.

An arrangement of each of the inter-bus bars 141 and 142 may be an inversion of that of each of the inter-bus bars 144 and 145. A planar shape of the inter-bus bars 141 and 142 may be substantially the same as the inversion of a planar shape of the inter-bus bars 144 and 145. The arrangements of the inter-bus bars 141 and 142 may be the same, and the arrangements of the inter-bus bars 144 and 145 may be the same.

The inter-bus bar 141 may connect the negative terminal NT of the battery cell assembly 121' to the positive terminal PT of the battery cell assembly 122'. The inter-bus bar 142 may connect the negative terminal NT of the battery cell assembly 122' to the positive terminal PT of the battery cell assembly 123'. The inter-bus bar 144 may connect the negative terminal NT of the battery cell assembly 124' to the positive terminal PT of the battery cell assembly 125'. The inter-bus bar 145 may connect the negative terminal NT of the battery cell assembly 125' to the positive terminal PT of the battery cell assembly 126'.

The inter-bus bar 143' may connect the negative terminal NT of the battery cell assembly 123' to the positive terminal PT of the battery cell assembly 124'. The inter-bus bar 143' may have a straight bar shape.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a first battery cell assembly including a first positive terminal and a first negative terminal;
a second battery cell assembly including a second positive terminal and a second negative terminal and spaced apart from the first battery cell assembly in a first direction; and
a first inter-bus bar connecting the first negative terminal and the second positive terminal,
wherein the first inter-bus bar has a Z-shape.

2. The battery pack of claim 1, wherein the first inter-bus bar comprises:
a first negative electrode contact connected to the first negative terminal;
a first positive electrode contact connected to the second positive terminal; and
a first connection part connecting the first positive electrode contact and the first negative electrode contact.

3. The battery pack of claim 2, wherein the first connection part extends in a second direction perpendicular to the first direction.

4. The battery pack of claim 2, further comprising:
a third battery cell assembly including a third positive terminal and a third negative terminal and spaced apart from the second battery cell assembly in the first direction; and
a second inter-bus bar connecting the second negative terminal and the third positive terminal,
wherein the second inter-bus bar has a Z-shape.

5. The battery pack of claim 4, wherein an arrangement of the second inter-bus bar is an inversion of an arrangement of the first inter-bus bar.

6. The battery pack of claim 4, wherein the second inter-bus bar comprises:
a second negative electrode contact connected to the second negative terminal;
a second positive electrode contact connected to the third positive terminal; and
a second connection part connecting the second positive electrode contact and the second negative electrode contact.

7. The battery pack of claim 6, wherein the first positive electrode contact overlaps the second negative electrode contact in the first direction, and
the first negative electrode contact overlaps the second positive electrode contact in the first direction.

8. A battery pack comprising:
a first battery cell assembly including a first positive terminal and a first negative terminal;
a second battery cell assembly including a second positive terminal and a second negative terminal and spaced apart from the first battery cell assembly in a first direction ; and
a first inter-bus bar connecting the first negative terminal and the second positive terminal,
wherein the first inter-bus bar comprises a first negative electrode contact connected to the first negative terminal, a first positive electrode contact extending in the first direction, and a first connection part connecting the first positive electrode contact and the first negative electrode contact and extending in a second direction perpendicular to the first direction.

9. The battery pack of claim 8, wherein the first negative terminal and the second positive terminal are arranged in the first direction.

10. The battery pack of claim 8, wherein each of the first positive electrode contact and the first negative electrode contact extends in the first direction.

11. The battery pack of claim 10, wherein the first positive terminal and the first negative terminal are spaced apart from each other in the second direction.

12. The battery pack of claim 10, wherein the second positive terminal and the second negative terminal are spaced apart from each other in the second direction.

13. The battery pack of claim 10, wherein the first negative terminal is adjacent to a central area in the second direction, and
the second positive terminal is adjacent to an edge in the second direction.
